# EUROPÄISCHE PATENTSCHRIFT

(11) **EP 2 860 066 B1**
(45) Veröffentlichungstag und Bekanntmachung des Hinweises auf die Patenterteilung: **02.11.2016**
(21) Anmeldenummer: 14183578.5
(22) Anmeldetag: 04.09.2014
(51) Int. Cl.: B60R 9/06, B60R 9/10

(54) **Fahrradträger**
Bicycle carrier
Porte-vélo

(30) Priorität: 11.10.2013 DE 102013111233
(43) Veröffentlichungstag der Anmeldung: 15.04.2015
(73) Patentinhaber: Scambia Holdings Cyprus Limited, 3106 Limassol (CY)
(72) Erfinder: Kadnikov, Aleksej, 71229 Leonberg (DE)
(74) Vertreter: Hoeger, Stellrecht & Partner Patentanwälte mbB

(56) Entgegenhaltungen:
- EP-A1- 1 837 240
- DE-A1- 10 352 644
- DE-T2- 60 309 896
- DE-U1- 8 814 166
- US-A- 6 129 371
- US-A1- 2008 099 522

## Beschreibung

Die Erfindung betrifft einen Fahrradträger zur heckseitigen Montage an einer Kraftfahrzeugkarosserie, umfassend eine Trägerbasis mit einer Montagevorrichtung für die Verbindung des Fahrradträgers mit dem Heck der Kraftfahrzeugkarosserie und mindestens eine an der Trägerbasis angeordnete Radaufnahmeeinheit für ein Fahrrad.

Derartige Fahrradträger sind aus dem Stand der Technik bekannt. DE 8 814 166 U1 beschreibt ein Fahrradträger gemäß den Oberbegriff der Patentanspruchs 1. Bei derartigen Fahrradträgern wurden bislang lediglich Radaufnahmeeinheiten vorgesehen.

Der Erfindung liegt daher die Aufgabe zugrunde einen Fahrradträger der gattungsgemäßen Art derart zu verbessern, dass dieser verbesserte Möglichkeiten für einen Nutzer bietet.

Diese Aufgabe wird bei einem Fahrradträger der eingangs beschriebenen Art erfindungsgemäß dadurch gelöst, dass die Trägerbasis einen ein Gepäckfach aufweisenden Behälter umfasst.

Der Vorteil der erfindungsgemäßen Lösung ist darin zu sehen, dass damit der Fahrradträger mehr Möglichkeiten zur Verwendung bietet.

Beispielsweise wird mit dem Gepäckfach die Möglichkeit geschaffen, weiteres Gepäck, wie beispielsweise Fahrradzubehör, einfach und insbesondere einfach zugänglich zu transportieren.

Ferner erlaubt die erfindungsgemäße Lösung, dass selbst dann, wenn kein Fahrradtransport erfolgt, das Gepäckfach genutzt werden kann, um beispielsweise zusätzliches Gepäck mit dem Kraftfahrzeug zu transportieren.

Prinzipiell könnte der Behälter so ausgebildet sein, dass er mit einer Behälteröffnung an einer Oberseite versehen ist.

Eine derartige Behälteröffnung an einer Oberseite wäre jedoch beim Transport von Fahrrädern schwer zugänglich.

Aus diesem Grund sieht eine vorteilhafte Lösung vor, dass der Behälter eine Behälteröffnung aufweist, die auf einer der Montagevorrichtung abgewandten Seite der Trägerbasis angeordnet ist.

Eine derartige Behälteröffnung ist selbst bei auf dem Fahrradträger montierten Fahrrädern leicht und einfach zugänglich.

Besonders günstig ist es dabei, wenn die Behälteröffnung durch ein Verschlusselement verschließbar ist, um das in dem Behälter verstaute Gut sicher transportieren zu können.

Ein derartiges Verschlusselement könnte beispielsweise abnehmbar an dem Behälter angeordnet sein.

Um eine Gebrauchssicherheit zu erreichen, ist vorzugsweise vorgesehen, dass das Verschlusselement an dem Behälter bewegbar gehalten ist.

Besonders vorteilhaft ist es, wenn das Verschlusselement klappbar an dem Behälter gehalten ist.

Eine besonders vorteilhafte Lösung sieht vor, dass das Verschlusselement von einer die Behälteröffnung verschließenden Verschlussstellung in eine Offenstellung überführbar ist, in welcher dieses eine Ablagefläche und/oder eine Sitzfläche bildet.

Beispielsweise ist in dieser Offenstellung vorgesehen, dass das Verschlusselement bei an der Kraftfahrzeugkarosserie montiertem Fahrradträger eine ungefähr horizontal verlaufende Ablage und/oder Sitzfläche bildet.

Dabei ist unter ungefähr horizontal verlaufend zu verstehen, dass die Neigung gegenüber der Horizontalen weniger als 20°, noch besser weniger als 15°, in jeder Richtung beträgt.

Insbesondere lässt sich das Verschlusselement in der eine Ablagefläche oder Sitzfläche bildenden Offenstellung entweder dadurch stabil positionieren, dass dieses mit einem hinsichtlich der Schwenkbewegung begrenzten Scharnier, beispielsweise mit einem Anschlagscharnier versehen ist.

Eine andere Lösung sieht vor, dass das Verschlusselement mit einem Stützfuß versehen ist, mit welchem die eine Ablagefläche und/oder eine Sitzfläche bildende Offenstellung stabilisierbar ist.

Die Radaufnahmeeinheiten könnten unabhängig von dem Behälter an der Trägerbasis angeordnet sein.

Eine besonders kompakte und günstige Lösung sieht vor, dass an dem Behälter die Radaufnahmeeinheiten für die Fahrräder gehalten sind, so dass dadurch ein sehr kompakter Aufbau bei möglichst großem Gepäckfach im Behälter realisierbar ist.

Um ferner die Fahrräder zuverlässig und sicher an dem erfindungsgemäßen Fahrradträger abstützen zu können, ist vorzugsweise vorgesehen, dass der Behälter Stützabschnitte zur Abstützung von Rädern des Fahrrads aufweist.

Eine besonders vorteilhafte Lösung sieht vor, dass der Behälter ein Behälteroberteil aufweist, welches von einem Mittelabschnitt ausgehend nach außen abfallende Stützabschnitte für die Räder der Fahrräder aufweist.

Damit lässt sich der Behälter durch ein derart geformtes Behälteroberteil in besonders günstiger Weise auch zur Abstützung der Fahrräder einsetzen, um diese stabil im Fahrradträger aufzunehmen.

Um die Räder des Fahrrades stabil ausgerichtet zu halten, ist vorzugsweise vorgesehen, dass im Bereich der Stützabschnitte Führungskanäle für die Räder mindestens eines Fahrrades vorgesehen sind.

Derartige Führungskanäle können dabei in unterschiedlichster Art und Weise realisiert werden.

Eine vorteilhafte Lösung sieht vor, dass die Führungskanäle durch die mindestens eine Radaufnahmeeinheit im Zusammenwirken mit den Stützabschnitten gebildet sind.

Eine andere vorteilhafte Lösung sieht vor, dass die Führungskanäle durch Vertiefungen im Behälteroberteil insbesondere im Bereich der Stützabschnitte gebildet sind.

Das heißt, dass das Behälteroberteil mit eingeformten Vertiefungen versehen ist, die die Ausrichtung der Räder des Fahrrads stabilisieren und/oder vorgeben.

Alternativ oder ergänzend wir die eingangs genannte Aufgabe auch durch einen Fahrradträger gelöst, bei welchem die mindestens eine Radaufnahmeeinheit in mindestens einer Fahrradaufnahmestellung seitlich über die Trägerbasis überstehende Seitenteile aufweist.

Der Vorteil dieser Lösung ist darin zu sehen, dass durch die Seitenteile eine zuverlässige Stabilisierung mindestens eines Fahrrads an dem Fahrradträger realisierbar ist.

Eine besonders günstige Lösung sieht dabei vor, dass jedes Seitenteil einen Führungsdurchlass zur Aufnahme eines Bereichs eines Rads aufweist.

Ein derartiger Führungsdurchlass ist dabei so ausgebildet, dass ein Bereich eines Rads in den Führungsdurchlass einsteckbar und dadurch gegen Kippbewegungen stabiliserbar ist.

Damit ist mit einem derartigen Seitenteil eine weit zuverlässigere und bessere Fixierung eines Rades des Fahrrads möglich, als dies bei den üblicherweise aus dem Stand der Technik bekannten Rinnen oder Vertiefungsrinnen der Fall ist, da in diesem Fall das Seitenteil entsprechend der Lage einer Sekarite eines Kreisbogens erfasst.

Insbesondere ist dabei vorgesehen, dass der Bereich des jeweiligen Rades zumindest teilweise durch den Führungsdurchlass hindurchsteckbar ist und somit den Führungsdurchlass durchgreift und somit die eine Abstützung des Rades gegen ein Kippen ermöglicht.

Eine besonders zweckmäßige Stabilisierung des jeweiligen Rades durch das Seitenteil ist dann möglich, wenn das jeweilige Seitenteil den jeweiligen Führungsdurchlass umgreift.

Insbesondere ist dabei vorgesehen, dass das jeweilige Seitenteil den jeweiligen Führungsdurchlass U-förmig umgreift und somit an beiden Längsseiten des Durchlasses in der Lage ist, das in den Führungsdurchlass eingreifende Rad gegen ein zu starkes Kippen zu stabilisieren.

Bei dem erfindungsgemäßen Fahrradträger können dabei die Seitenteile in unterschiedlichster Art und Weise an der Trägerbasis gehalten sein.

Eine vorteilehafte Lösung sieht dabei vor, dass die Seitenteile von einem Mittelteil gehalten sind, das seinerseits an der Trägerbasis gehalten ist.

In diesem Fall können beispielsweise die Seitenteile starr oder bewegbar mit dem Mittelteil verbunden sein.

Im einfachsten Fall ist eine starre Verbindung vorgesehen.

In einem anderen Fall besteht die Möglichkeit die Seitenteile bewegbar, beispielsweise gelenkig mit dem Mittelteil oder mit der Trägerbasis oder mit dem Behälter zu verbinden.

Eine besonders günstige Lösung sieht vor, dass die Seitenteile relativ zu der Trägerbasis in unterschiedlichen Fahrradaufnahmestellungen positionierbar und auch in diesen Stellungen festlegbar sind.

Eine derartige Lösung hat den Vorteil, dass durch die Positionierung der Seitenteile in unterschiedlichen Fahrradaufnahmestellungen die Möglichkeit besteht, die Lage der Seitenteile an die Größe der Räder der Fahrräder anzupassen und insbesondere in den Fahrradaufnahmestellungen Ausrichtungen der Seitenteile zu wählen, die eine besonders günstige Stabilisierung des jeweiligen Rads des Fahrrads erlauben.

Im einfachsten Fall sind dabei die Seitenteile mittels einer Gelenkeinheit relativ zur Trägerbasis in verschiedenen Fahrradaufnahmestellungen positionierbar.

Dabei kann die Gelenkeinheit entweder eine Gelenkeinheit sein, die eine Verbindung der Seitenteile mit dem Mittelteil herstellt oder eine Verbindung der Seitenteile mit der Trägerbasis, insbesondere dem Behälter herstellt, so dass das Mittelteil der Radaufnahmeeinheit entfallen kann.

Eine weitere vorteilhafte Lösung sieht vor, dass die Seitenteile von mindestens einer Fahrradaufnahmestellung in eine für einen Fahrradtransport ungeeignete Kompaktstellung überführbar ist, um beispielsweise geringfügige Behinderungen beim Fahren des Kraftfahrzeugs zu erreichen oder auch um den Fahrradträger in einfacher Weise bei Nichtbenutzung an der Kraftfahrzeugkarosserie verstauen zu können.

Üblicherweise ist bei den bislang bekannten Fahrradträgern vorgesehen, dass die Seitenteile in ihrer Kompaktstellung sich quer zu der Fahrradaufnahmestellung erstrecken, beispielsweise in vertikaler Richtung oder beispielsweise mit einer Neigung von bis zu 45° zur vertikalen Richtung.

Eine besonders günstige Lösung sieht jedoch vor, dass die Seitenteile die Trägerbasis übergreifen und somit der Raumbedarf noch weiter reduziert wird.

Insbesondere ist vorgesehen, dass in der Kompaktstellung mindestens eines der Seitenteile auf der Trägerbasis, insbesondere auf dem Behälter, aufliegt und somit den Raumbedarf zu reduzieren.

In diesem Fall kann dann beispielsweise das andere der Seitenteile, die gemeinsam die Radaufnahmeeinheit bilden, auf das auf der Trägerbasis aufliegende Seitenteil aufgelegt sein.

Um noch mehr Einstellmöglichkeiten zu haben, ist vorzugsweise vorgesehen, dass die Seitenteile hinsichtlich ihrer Längenausdehnung verstellbar sind.

Dies hat gleichzeitig zur Folge, dass die Ausdehnung des Führungsdurchlasses in der Längsrichtung variabel ist, so dass insbesondere die Möglichkeit besteht, die Seitenteile an kleine Raddurchmesser und an große Raddurchmesser anzupassen.

Dabei sind die unterschiedlichsten Möglichkeiten denkbar.

Eine vorteilhafte Lösung sieht vor, dass die Seitenteile einen Teleskopabschnitt zur variablen Einstellung ihrer Längenausdehnung aufweisen.

Insbesondere ist dabei allerdings vorgesehen, dass die jeweilige Einstellung der Seitenteile durch Halteelemente fixierbar ist, um diese Einstellung der Seitenteile zu sichern und um somit die Räder des jeweiligen Fahrrads transportsicher aufnehmen zu können.

Weitere Merkmale der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines ersten Ausführungsbeispiels eines erfindungsgemäßen Fahrradträgers in einer Betriebsstellung, montiert an einem Heck einer Kraftfahrzeugkarosserie eines Kraftfahrzeugs zum Transport eines Fahrrades;
- Fig. 2: eine Ansicht des ersten Ausführungsbeispiels in Richtung des Pfeils A in Fig. 1, das heißt entgegengesetzt einer Vorwärtsfahrtrichtung des Kraftfahrzeugs;
- Fig. 3: eine perspektivische Ansicht des Fahrradträgers gemäß Fig. 2 von hinten rechts mit einem geöffneten und eine Ablagefläche und/oder eine Sitzfläche bildenden Verschlusselement;
- Fig. 4: eine Darstellung des ersten Ausführungsbeispiels des erfindungsgemäßen Fahrradträgers in perspektivischer Darstellung von hinten links ohne ein aufgestelltes Fahrrad und mit einem durch das Verschlusselement verschlossenem Behälter;
- Fig.: 5 eine Darstellung ähnlich Fig. 1 eines zweiten Ausführungsbeispiels eines erfindungsgemäßen Fahrradträgers;
- Fig. 6: eine Draufsicht auf das zweite Ausführungsbeispiel des erfindungsgemäßen Fahrradträgers in Richtung des Pfeils B in Fig. 5;
- Fig. 7: eine perspektivische Darstellung des zweiten Ausführungsbeispiels des erfindungsgemäßen Fahrradträgers von hinten links;
- Fig. 8: eine Ansicht des zweiten Ausführungsbeispiels des erfindungsgemäßen Fahrradträgers in Richtung des Pfeils C in Fig. 5 mit in Fahrradaufnahmestellung stehenden Seitenteilen, wobei ein Seitenteil in zwei verschiedenen Fahrradaufnahmestellungen steht;
- Fig. 9: eine Darstellung des erfindungsgemäßen Fahrradträgers ohne ein aufgestelltes Fahrrad mit drei Radaufnahmeeinheiten, deren Seitenteile in einer Fahrradaufnahmestellung stehen;
- Fig. 10: eine Ansicht des zweiten Ausführungsbeispiels des erfindungsgemäßen Fahrradträgers gemäß Fig. 9 in Richtung des Pfeils D in Fig. 9;
- Fig. 11: eine Darstellung des zweiten Ausführungsbeispiels des erfindungsgemäßen Fahrradträgers gemäß Fig. 10 mit in Kompaktstellung stehenden Seitenteilen und
- Fig. 12: eine Draufsicht auf das zweite Ausführungsbeispiel des erfindungsgemäßen Fahrradträgers entsprechend Fig. 9 mit in Kompaktstellung stehenden Seitenteilen.

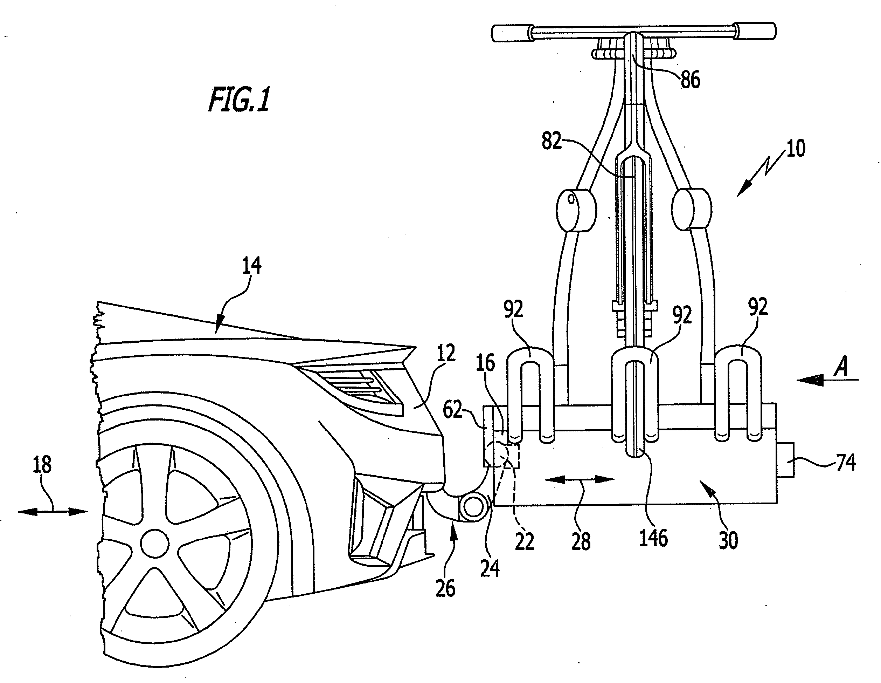

Ein in Fig. 1 dargestelltes erstes Ausführungsbeispiel eines erfindungsgemäßen Fahrradträgers 10 ist an einem Heck 12 einer Fahrzeugkarosserie 14 eines Kraftfahrzeugs, insbesondere eines Personenkraftfahrzeugs, dadurch montiert, dass der Fahrradträger als Montagevorrichtung eine Aufnahme 16 für eine Kupplungskugel 22 und gegebenenfalls einen Kugelhals 24 einer an dem Heck 12 montierten Anhängekupplung 26 aufweist, wobei durch die Aufnahme 16 eine sich in einer zu einer Fahrzeuglängsrichtung 18 parallelen Längsrichtung 28 erstreckende als Ganzes mit 30 bezeichnete Trägerbasis des Fahrradträgers 10 an der Kupplungskugel 22 und dem Kugelhals 24 montierbar und stabil abstützbar ist.

Dabei umgreift die Aufnahme 16 nicht nur die Kupplungskugel 22, sondern stützt sich beispielsweise noch zusätzlich am Kugelhals 24, insbesondere an einem nahe der Kupplungskugel liegenden Bereich des Kugelhalses 24, ab.

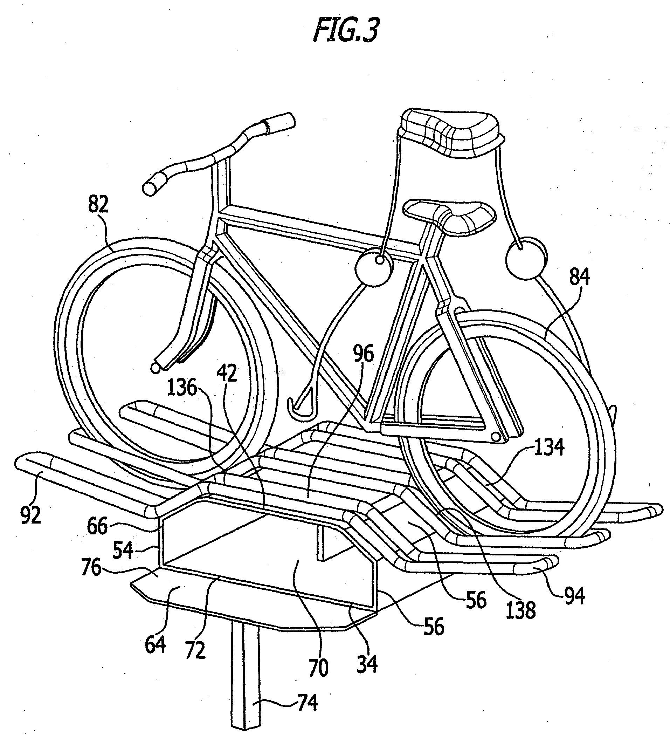

Wie in den Fig. 1 bis 4 im Zusammenhang mit dem ersten Ausführungsbeispiel des erfindungsgemäßen Fahrradträgers 10 dargestellt, umfasst die Trägerbasis 30 einen Behälter 32, welcher einen Behälterboden 34 aufweist, von dem ausgehend sich Seitenwände 36 und 38 des Behälters erheben, wobei die Seitenwände 36, 38 beispielsweise parallel zueinander verlaufen.

Im Anschluss an die Seitenwände 36 und 38 umfasst der Behälter 32 ein den Behälterboden 34 übergreifende Behälteroberteil 42, welches im an der Fahrzeugkarosserie 14 montierten Zustand des Fahrradträgers ausgehend von einem Mittelabschnitt 52 des Behälteroberteils 42 nach außen hin abfallende, insbesondere in Richtung der Seitenwände 36, 38 hin abfallende Stützabschnitte 54, 56 aufweist, die beispielsweise ähnlich Seitenschenkeln eines Trapezes relativ zu dem Mittelabschnitt 52 verlaufen.

Es wäre alternativ dazu aber auch denkbar, das Behälteroberteil 42 insgesamt als gewölbtes Behälteroberteil auszubilden, dessen Außenbereiche dann die Stützabschnitte 54, 56 bilden.

Ferner ist der Behälter 32 noch durch eine die Aufnahme 16 tragende und gegebenenfalls umfassende vordere Stirnwand 62 verschlossen, welche dem Heck 12 der Fahrzeugkarosserie 14 zugewandt ist und außerdem ist der Behälter 32 auf seiner dem Heck 12 der Fahrzeugkarosserie abgewandten Rückseite mit einer Verschlussklappe 64 versehen, mit welcher eine rückseitige Behälteröffnung 66 verschließbar ist.

Der Behälter 32 umschließt dabei ein als Ganzes mit 70 bezeichnetes Gepäckfach, in welchem ein Nutzer des Fahrradträgers 10 die Möglichkeit hat, Gegenstände, insbesondere Gepäck oder Fahrradausrüstung oder Fahrradkleidung oder ähnliches, zu verstauen und somit in einfacher Weise zu transportieren.

Ferner ist vorzugsweise vorgesehen, dass die Verschlussklappe 64 über ein Scharnier 72 an dem Behälterboden 34 schwenkbar angelenkt ist, so dass die Verschlussklappe 64 dann, wenn diese in einer Offenstellung steht, sich quer zur Vertikalen 44, vorzugsweise ungefähr in horizontaler Richtung erstreckt, so dass die Verschlussklappe 64 in ihrer Offenstellung mit einer in einer Verschlussstellung dem Gepäckfach 70 zugewandten Innenseite 76 eine Abstellfläche oder Sitzfläche bildet, die für einen Nutzer beispielsweise zum Ablegen von Gegenständen oder als Sitzgelegenheit vorteilhaft ist.

Insbesondere wird die Verschlussklappe 64 in der Offenstellung durch eine Stütze 74 auf einem Untergrund abgestützt.

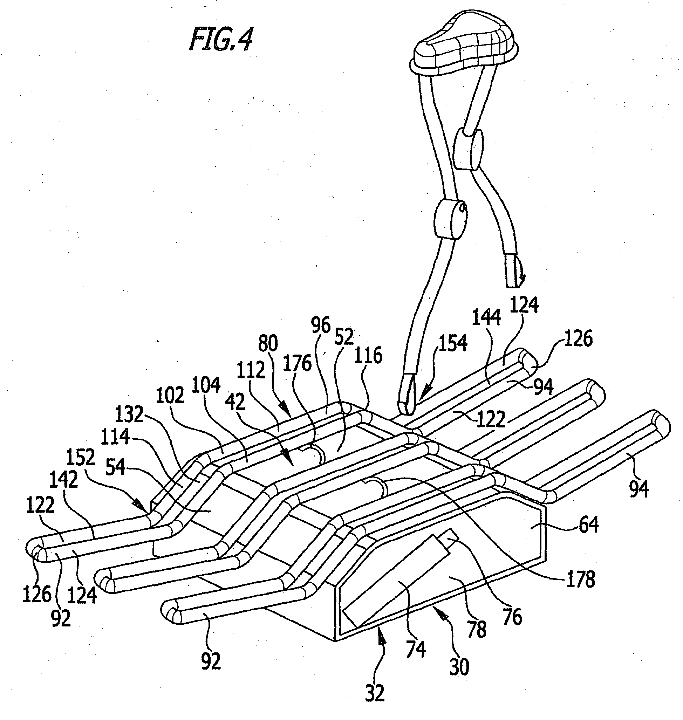

Dabei ist die Stütze 74, wie beispielsweise in Fig. 4 dargestellt, mittels eines Scharniers 76 klappbar mit der Verschlussklappe 64 verbunden, so dass sich die Stütze 74 in der Verschlussstellung der Verschlussklappe 64, dargestellt in Fig. 4, an eine Außenseite 78 der Verschlussklappe 64 anlegen und fixieren lässt.

An der Trägerbasis 30, beim ersten Ausführungsbeispiel unmittelbar am Behälter 32, sind Radaufnahmeeinheiten 80 für Räder 82 und 84 eines oder mehrerer Fahrräder 86 angeordnet, welche sich quer zur Längsrichtung 28 erstrecken und seitlich über die Trägerbasis 30, in diesem Fall den Behälter 32, überstehende Seitenteile 92 und 94 aufweisen, die beiderseits eines Mittelteils 96 angeordnet sind, welches fest mit der Trägerbasis 30, insbesondere mit dem Behälter 32 verbunden ist.

Bei dem in den Fig. 1 bis 4 dargestellten ersten Ausführungsbeispiel liegt das Mittelteil 96 auf dem Behälteroberteil 42 auf, und zwar sowohl auf dem Mittelabschnitt 52 alls auch auf den Stützabschnitten 54 und 56 und trägt die von der Trägerbasis 30 seitlich abstehenden und in einer Fahrradaufnahmestellung F stehenden Seitenteilen 92 und 94.

Beim in Fig. 1 bis 4 dargestellten ersten Ausführungsbeispiel sind die Radaufnahmeeinheiten 80 vorzugsweise durch parallel und im Abstand voneinander und quer zur Längsrichtung 28 verlaufende gebogene Längsträger 102, 104 gebildet, von denen jeder ein sich über den Mittelabschnitt 52 des Behälteroberteils 42 erstreckendes Mitteilteil 112, beiderseits des Mittelteils 112 dem Verlauf der Stützabschnitte 54 und 56 angenäherte oder angepasste Innenführungsteile 114 und 116 sowie im Anschluss an die Innenführungsteile 114, 116 sich im Bereich der Seitenteile 92, 94 von der Trägerbasis 30, insbesondere dem Behälter 32, nach außen erstreckende Außenführungsteile 122 und 124 aufweist, wobei jeweils die Außenführungsteile 122 an ihren Enden mit einem Abschlussteil 126 versehen sind. Die Abschlussteile 126 erstrecken sich jeweils zwischen den Außenführungsteilen 122 der Längsträger 102 und 104 und den diesen gegenüberliegenden Außenführungsteilen 124 der Längsträger 102 und 104.

Für eine besonders einfache Herstellung der Radaufnahmeeinheiten 80 des ersten Ausführungsbeispiels ist vorgesehen, dass einer der Längsträger 102, 104 an seinem Außenführungsteil 122 eines der Abschlussteile 126 angeformt hat, das sich dann in Richtung des anderen Außenführungsteils 124 erstreckt, so dass die beiden Längsträger 102, 104 als Gleichteile hergestellt werden und um 180° relativ zueinander verdreht zu der Radaufnahmeeinheit zusammengesetzt können.

Bei den Radaufnahmeeinheiten 80 des ersten Ausführungsbeispiels bilden die über die Stützabschnitte 54, 56 des Behälteroberteils 42 hinweg verlaufenden Innenführungsteilen 114 bzw. 116 zwischen sich jeweils einen Führungskanal 132, 134, wobei die Führungskanäle 132, 134 durch die Stützabschnitte 54, 56 des Behälteroberteils 42 in Schwerkraftrichtung gesehen nach unten abgeschlossen sind.

In diese Führungskanäle 132 und 134 tauchen dann die Räder 82 und 84 eines auf dem erfindungsgemäßen Fahrradträger aufgestellten Fahrrades 86 ein, und zwar mit den Bereichen 136 und 138 der Räder 82, 84, die sich an den Stützabschnitten 54, 56 des Behälteroberteils 42 abstützen.

Ferner bilden die Längsträger 102, 104 im Bereich der Seitenteile 92, 94 mit ihren jeweiligen Außenführungsteilen 122 bzw. 124 Führungsdurchlässe 142, 144, durch welche die Räder 82, 84 eines auf dem erfindungsgemäßen Fahrradträger 10 abgestützten Fahrrades 86 mit seitlich über die Trägerbasis 30, insbesondere den Behälter 32 überstehenden Bereichen 146, 148 teilweise hindurchgreifen und somit eine Kippabstützung durch die Führungsdurchlässe 142, 144 erfahren.

Im Gegensatz dazu liefern die Führungskanäle 132, 134 primär eine Drehung und eine Querfixierung der für die Bereiche 136 und 138 der Räder 80, 82 gegen eine Bewegung quer zu den Längsträgern 102, 104.

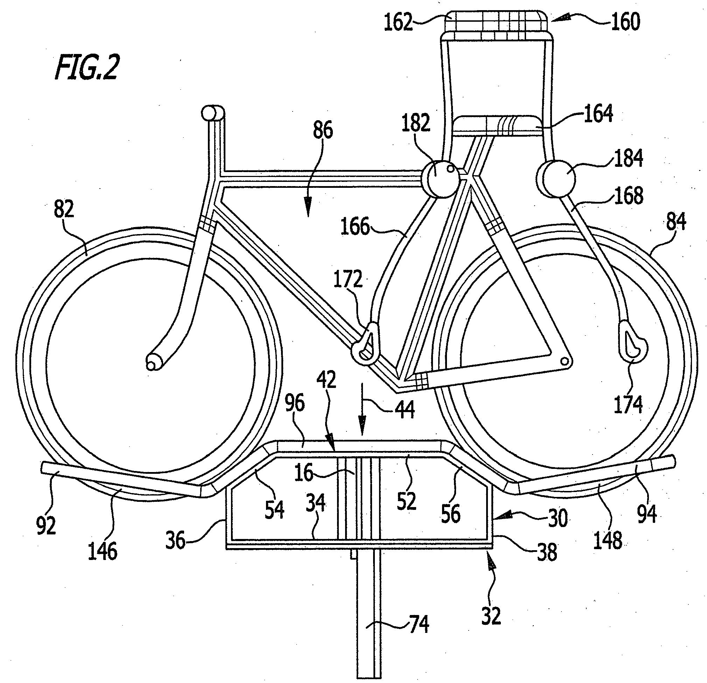

Wie in den Fig. 2 bis 4 dargestellt, verlaufen bei einem an dem Heck 12 der Fahrzeugkarosserie 14 montierten Fahrradträger 10 die Innenführungsteile 114, 116 relativ zu den entsprechenden Außenführungsteilen 122 bzw. 124 ungefähr V-förmig, wobei ausgehend von den Mittelteilen die Innenführungsteile 114, 116 nach außen hin abfallend ausgebildet sind, während die Außenführungsteile 122 bzw. 124 nach außen hin wieder aufsteigend verlaufen.

Die Radaufnahmeeinheiten 80 bilden somit mit ihren Führungskanälen 132 und 134 sowie den mit diesen fluchtenden Führungsdurchlässen 142 bzw. 144 insgesamt Führungsaufnahmen 152 bzw. 154 für die Räder 80 bzw. 82 eines Fahrrads 86, die einerseits das Fahrrad 86 über die Räder 82, 84 so weit abstützen, dass ein mit seinen Rädern 82, 84 in die Führungsaufnahmen 152, 154 eingestelltes Fahrrad 86 weder in Längsrichtung 28 kippen oder quer zur Längsrichtung seitlich von dem Fahrradträger 10 herunterfallen kann.

Somit ist es lediglich noch notwendig, sicherzustellen, dass die Räder 82, 84 des Fahrrades 86 in Eingriff mit den Führungsaufnahmen 152 und 154 verbleiben.

Hierzu ist eine Haltevorrichtung 160 vorgesehen, die beispielsweise mit einem Halteaufnahmeelement 162 am Fahrrad 86, beispielsweise an einem Sattel 164 desselben, angreift und diesen beispielsweise durch zumindest partiellen Formschluss aufnimmt.

Von diesem Halteaufnahmeelement 162 weg verlaufen Haltestränge 166, 168, die an ihren dem Halteaufnahmeelement 162 abgewandten Enden mit Fixierelementen 172, 174 versehen sind, die an der Trägerbasis 30, beispielsweise am Behälter 32, festlegbar sind.

Zum Beispiel sind die Fixierelemente 172, 174 Hacken, die mit entsprechenden Ösen 176, 178 am Behälter 32 verbindbar sind.

Ferner sind die Haltestränge 166, 168 noch mit Einstellelementen 182 und 184 versehen, mit welchen eine Länge der Haltestränge 166, 168 einstellbar ist, um somit mit den straff gezogenen Haltesträngen 166, 168 das Halteaufnahmeelement 162 so zu beaufschlagen, dass dieses das Fahrrad 86 in den Führungsaufnahmen 152, 154 fixiert hält.

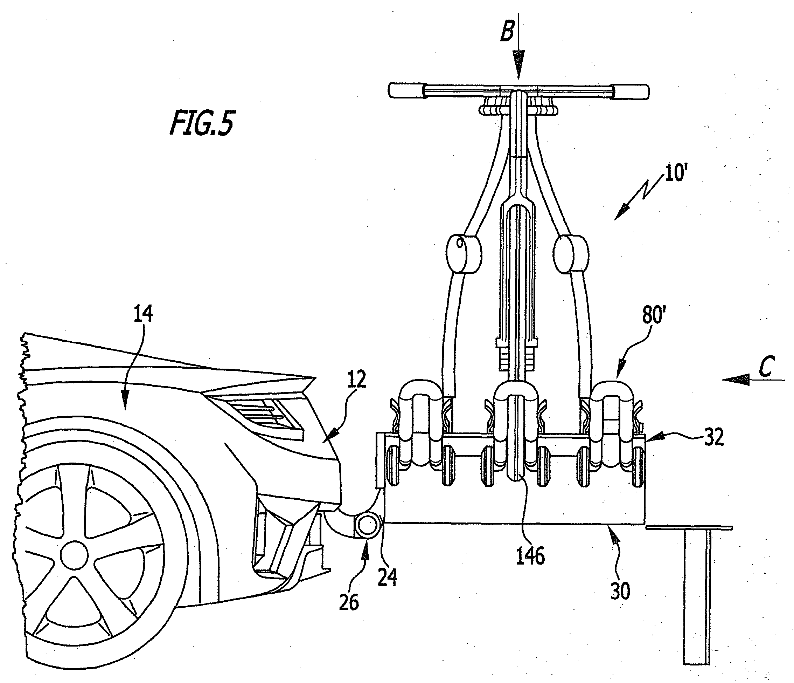

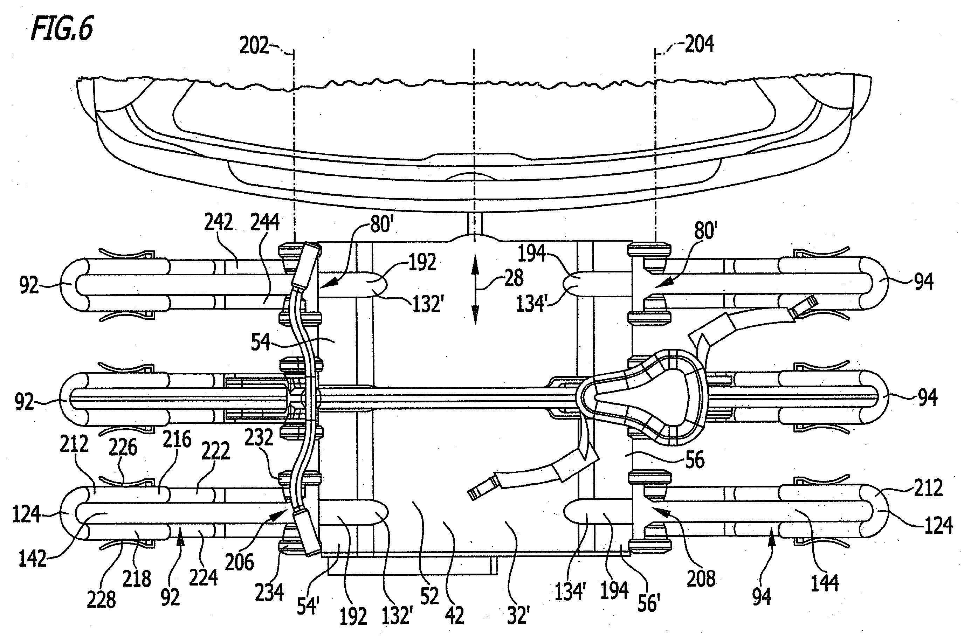

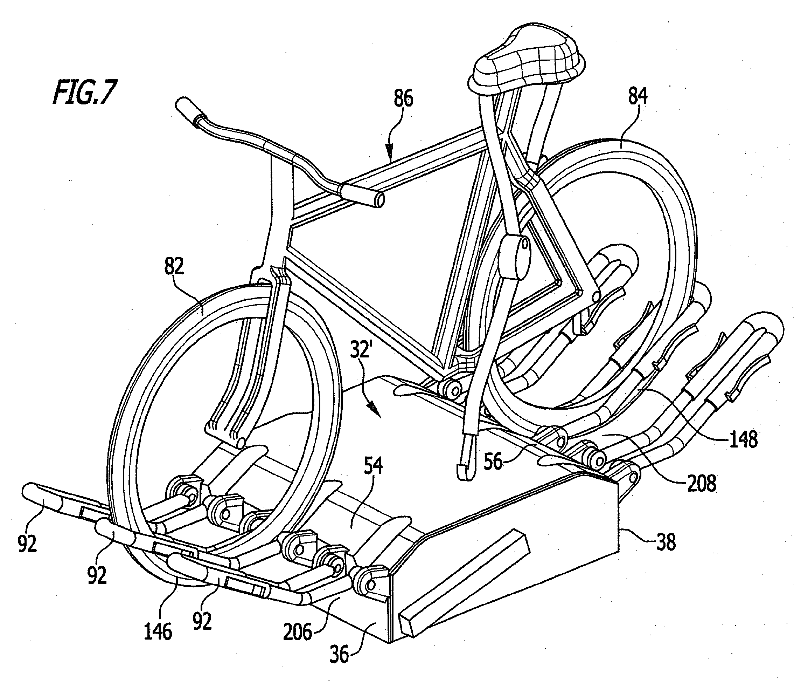

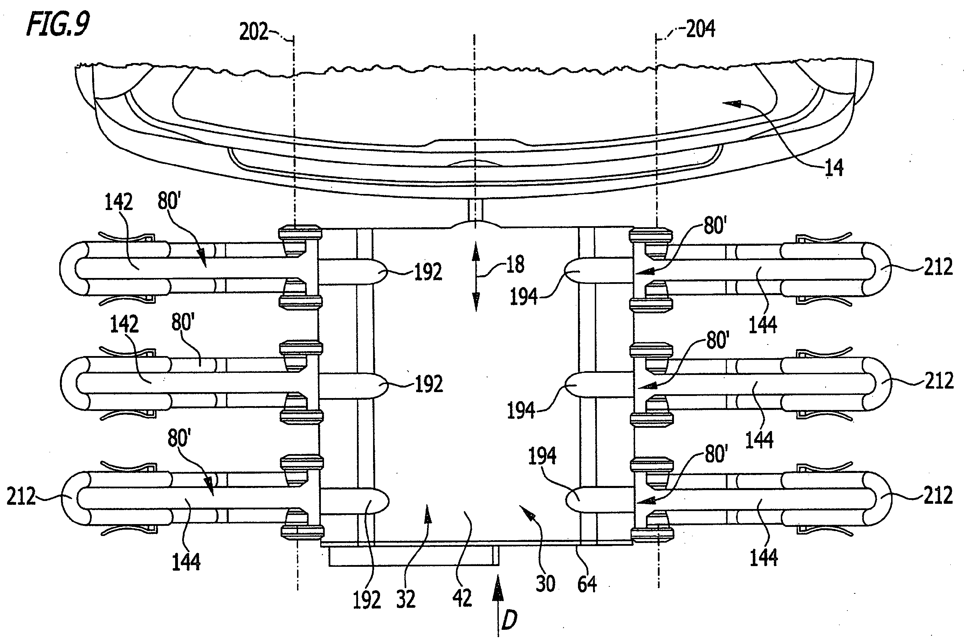

Bei einem zweiten Ausführungsbeispiel eines erfindungsgemäßen Fahrradträgers 10', dargestellt in den Fig. 5 bis 11, sind diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Im Gegensatz zum ersten Ausführungsbeispiel ist bei dem zweiten Ausführungsbeispiel das Behälteroberteil 42 so ausgebildet, dass dieses im Bereich der Stützabschnitte 54', 56' vorgesehene Eintiefungen 192, 194 aufweist, die die Führungskanäle 132', 134' der Radaufnahmeeinheiten 80' bilden.

Ferner werden die Radaufnahmeeinheiten 80' noch durch Seitenteile 92 und 94 gebildet, die sich ausgehend von der Trägerbasis 30, insbesondere dem Behälter 32' erstrecken und an der Trägerbasis 30 bzw. dem Behälter 32' mit feststellbaren Gelenkeinheiten 206, 208 um parallel zur Längsrichtung 28 verlaufende Achsen 202, 204 schwenkbar gehalten sind, wobei die Gelenkeinheiten 206, 208 beispielsweise an den Seitenwänden 36, 38 des Behälters 32' gehalten sind.

Die Gelenkeinheiten 206, 208 können aber beispielsweise auch am Behälteroberteil 42, beispielsweise im Bereich der Stützabschnitte 54, 56 desselben angeordnet werden.

Die Seitenteile 92, 94 bilden dabei ihrerseits die Führungsdurchlässe 142, 144, in welche die Bereiche 146, 148 der Räder 82, 84 des jeweiligen Fahrrades 86 eingesteckt werden und somit die Räder 82, 84 aufrecht halten, wobei die Räder 82, 84 auch noch gleichzeitig in die als Vertiefungen 192, 194 ausgebildeten Führungskanäle 132', 134' eingreifen und dadurch geführt sind.

Eine Fixierung der Räder 80, 82 des jeweiligen Fahrrades 86 erfolgt somit vom Prinzip her in gleicher Weise, wie dies im Zusammenhang mit dem ersten Ausführungsbeispiel beschrieben wurde.

Im Gegensatz zum ersten Ausführungsbeispiel sind die Seitenteile 92, 94 bei dem zweiten Ausführungsbeispiel zur Bildung der Führungsdurchlässe 142, 144 durch einen U-förmig geformten Endabschnitt 212 gebildet, der mit seinem Mittelstück 214 das jeweilige Abschlussteil 126 bildet, und mit seinen Seitenschenkeln 216, 218 verstellbar mit Längsstreben 222, 224 verbunden ist, die beispielsweise in die Seitenschenkel 216, 218 über eine variable Strecke einschiebbar sind und durch Halteelemente 226, 228 in verschiedenen eingeschobenen Positionen relativ zu den Seitenschenkeln 216, 218 festlegbar sind.

Die Längsstreben 222, 224 erstrecken sich dann von den Endabschnitten 212 bis zu den jeweiligen Gelenkeinheiten 206, 208, wobei jede der Längsstreben 222 bzw. 224 mittels eines Gelenks 232, 234 mit der Trägerbasis 30, insbesondere dem Behälter 32, gelenkig verbunden ist, so dass jede Gelenkeinheiten 206, 208 zwei Einzelgelenke 232, 234 umfasst.

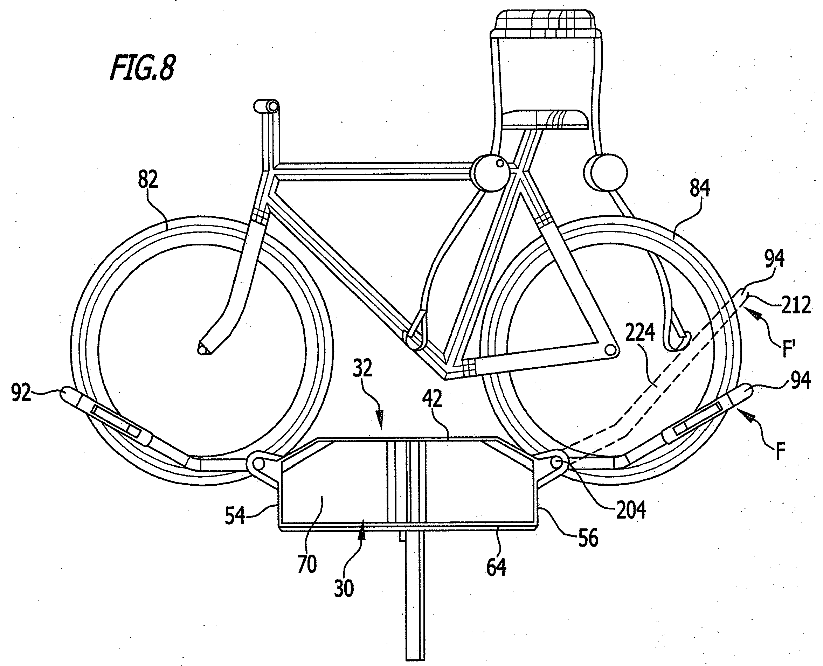

Dabei ist jedes der Einzelgelenke 232, 234 in den verschiedenen Drehstellungen um die Achsen 202, 204 festlegbar, so dass die Seitenteile 92, 94 in verschiedenen Schwenkstellungen und somit auch in verschiedenen Fahrradaufnahmestellungen F, F' positionierbar sind, wie dies beispielsweise im Zusammenhang mit Fig. 8 durch die Verschwenkung des Seitenteils 94 um die Achse 204 dargestellt ist.

Ferner ist durch die variable Einstellbarkeit der Längenerstreckung der Seitenteile 94, das heißt durch die Verschiebbarkeit der Endabschnitte 212 relativ zu den Längsstreben 222, 224, die Umfassung des jeweiligen Rades 82, 84, in Fig. 8 die Umfassung des Rades 84, variabel einstellbar, um eine sichere Position für die Fixierung und Ausrichtung des jeweiligen Rades 84 durch das entsprechende Seitenteil 92, 94 finden zu können, wie in Fig. 8 dargestellt.

Ferner sind die Seitenteile 92, 94 vorzugsweise so geformt, dass die Längsstreben 222, 224 V-förmig ausgebildet sind, beispielsweise mit einem V-Winkel, welcher dem Winkel zwischen den Stützabschnitten 54 und 56 und dem Mittelabschnitt 52 des Behälteroberteils 42 entspricht.

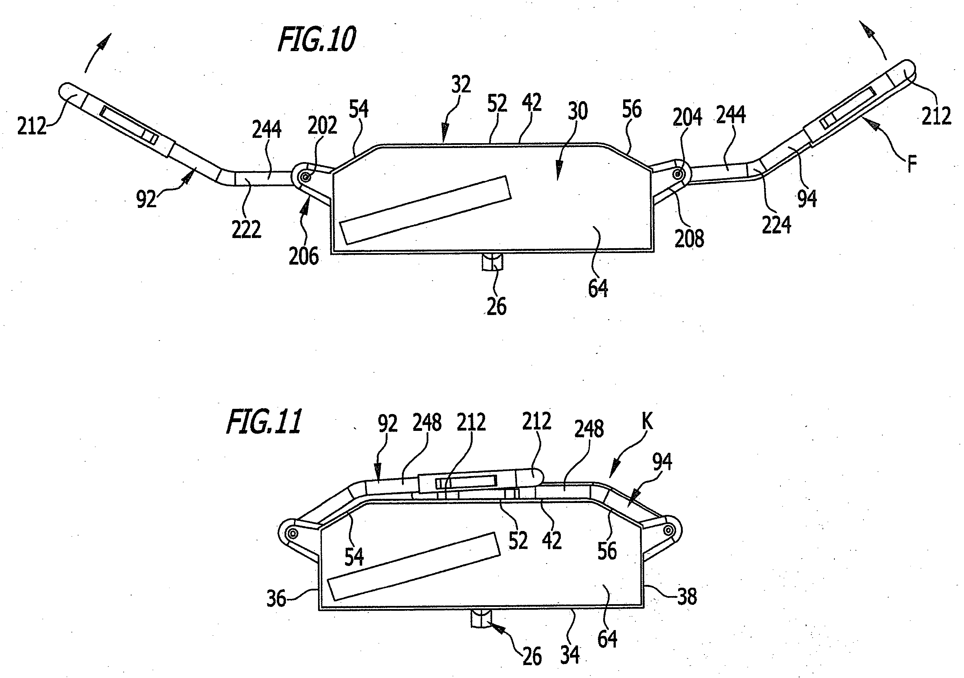

Damit besteht, wie in Fig. 11 dargestellt die Möglichkeit, die Seitenteile 92, 94 in eine Kompaktstellung K so zu verschwenken, dass eines derselben, beispielsweise das Seitenteil 94, auf das Behälteroberteil 42 auflegbar ist und beispielsweise dessen Oberflächenkontur folgt, während das Seitenteil 92 sich ebenfalls über das Behälteroberteil 42 hinweg erstreckt, jedoch auf dem auf dem Deckeloberteil 42 unmittelbar aufliegenden Seitenteil 94 aufliegt.

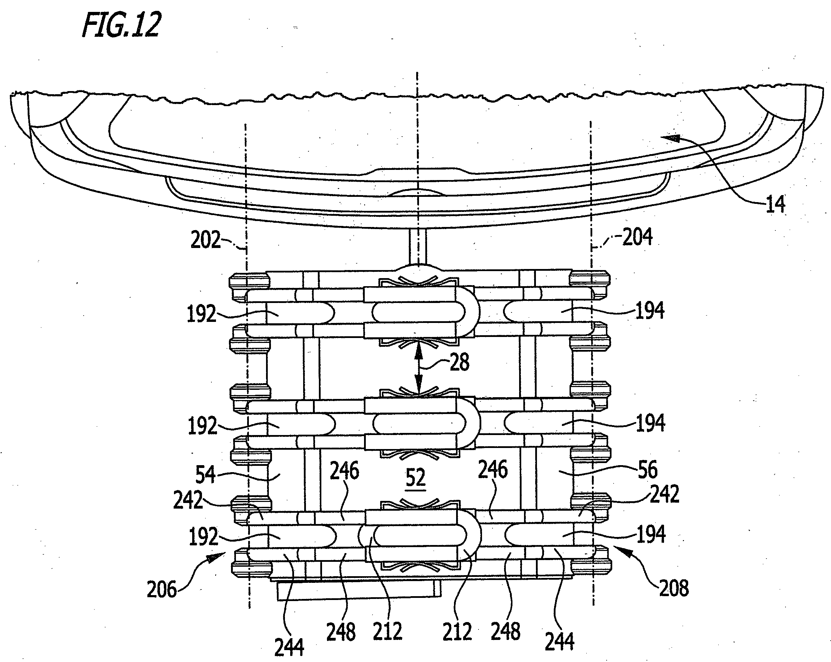

Vorzugsweise ist dies dadurch realisierbar, dass die Längsstreben 222, 224 gelenknahe Abschnitte 242, 244 aufweisen, die in ihrer Längserstreckung so dimensioniert sind, dass diese sich in der in Fig. 12 dargestellten auf das Behälteroberteil 42 geklappten Kompaktstellung mindestens über eine Distanz erstrecken, welche so groß ist, dass gelenkferne Abschnitte 246, 248 der Längsstreben 222, 224 sich über dem Mittelabschnitt 52 des Behälteroberteils 42 erstrecken und somit auch die Endabschnitte 212 über dem Mittelabschnitt 52 des Behälteroberteils 42 liegen.

## Patentansprüche

1. Fahrradträger zur heckseitigen Montage an einer Kraftfahrzeugkarosserie (14), umfassend eine Trägerbasis (30) mit einer Montagevorrichtung (16) für die Verbindung des Fahrradträgers (10) mit einem Heck (12) der Kraftfahrzeugkarosserie und mindestens eine an der Trägerbasis (30) angeordnete Radaufnahmeeinheit (80) für ein Fahrrad (86), welche einen ein Gepäckfach (70) aufweisenden Behälter (32) umfasst,
**dadurch gekennzeichnet, dass** der Behälter (32) Stützabschnitte (54, 56) zur Abstützung von Rädern (82, 84) des Fahrrades (86) aufweist, dass an dem Behälter (32) die mindestens eine Radaufnahmeeinheit (80) für die Fahrräder (86) gehalten ist, und dass die mindestens eine Radaufnahmeeinheit (80) in mindestens einer Fahrradaufnahmestellung (F) seitlich über den Behälter (32) überstehende Seitenteile (92, 94) aufweist.

2. Fahrradträger nach Anspruch 1, **dadurch gekennzeichnet, dass** der Behälter (32) eine Behälteröffnung (66) aufweist, die auf einer der Montagevorrichtung (16) abgewandten Seite der Trägerbasis (30) angeordnet ist und dass insbesondere die Behälteröffnung (66) durch ein Verschlusselement (64) verschließbar ist.

3. Fahrradträger nach Anspruch 2, **dadurch gekennzeichnet, dass** das Verschlusselement (64) an dem Behälter (32) bewegbar, insbesondere klappbar, an dem Behälter (32) gehalten ist.

4. Fahrradträger nach einem der voranstehenden Ansprüche, **dadurch gekennzeichnet, dass** der Behälter (32) ein Behälteroberteil (42) aufweist, welches von einem Mittelabschnitt (52) ausgehend nach außen abfallende Stützabschnitte (54, 56) für die Räder (82, 84) der Fahrräder (86) aufweist.

5. Fahrradträger nach Anspruch 4, **dadurch gekennzeichnet, dass** im Bereich der Stützabschnitte (54, 56) Führungskanäle (132, 134) für die Räder (82, 84) mindestens eines Fahrrades (86) vorgesehen sind und dass insbesondere die Führungskanäle (132, 134) durch die mindestens eine Radaufnahmeeinheit (80) im Zusammenwirken mit den Stützabschnitten (54, 56) gebildet sind.

6. Fahrradträger nach einem der voranstehenden Ansprüche, **dadurch gekennzeichnet, dass** jedes Seitenteil (92, 94) einen Führungsdurchlass (142, 144) zur Aufnahme eines Bereichs (146, 148) eines Rads (82, 84) aufweist und dass insbesondere der Bereich (146, 148) des jeweiligen Rads (82, 84) den Führungsdurchlass (142, 144) durchgreift.

7. Fahrradträger nach Anspruch6, **dadurch gekennzeichnet, dass** das jeweilige Seitenteil (92, 94) den jeweiligen Führungsdurchlass (142, 144) umgreift.

8. Fahrradträger nach einem der voranstehenden Ansprüche, **dadurch gekennzeichnet, dass** die Seitenteile (92, 94) von einem Mittelteil (96) gehalten sind, das seinerseits an der Trägerbasis (30) gehalten ist.

9. Fahrradträger nach einem der voranstehenden Ansprüche, **dadurch gekennzeichnet, dass** die Seitenteile (92, 94) in relativ zu der Trägerbasis (30) in unterschiedlichen Fahrradaufnahmestellungen (F) positionierbar sind und dass insbesondere die Seitenteile (92,94) mittels einer Gelenkeinheit (206, 208) relativ zur Trägerbasis (30) in verschiedenen Fahrradaufnahmestellungen (F) positionierbar sind.

10. Fahrradträger nach einem der voranstehenden Ansprüche, **dadurch gekennzeichnet, dass** die Seitenteile (92, 94) von mindestens einer Fahrradaufnahmestellung (F) in eine für einen Fahrradtransport ungeeignete Kompaktstellung (K) überführbar sind und dass insbesondere in der Kompaktstellung (K) die Seitenteile (92, 94) die Trägerbasis (30) übergreifen.

11. Fahrradträger nach Anspruch 10, **dadurch gekennzeichnet, dass** in der Kompaktstellung (K) mindestens eines der Seitenteile (92, 94) auf der Trägerbasis (30) aufliegt.

12. Fahrradträger nach einem der voranstehenden Ansprüche, **dadurch gekennzeichnet, dass** die Seitenteile (92, 94) hinsichtlich ihrer Längenausdehnung verstellbar sind und dass insbesondere die Seitenteile (92, 94) einen Teleskopabschnitt zur variablen Einstellung ihrer Längenausdehnung aufweisen.

## Claims

1. Bicycle carrier for mounting on the rear of the body (14) of a motor vehicle, comprising a carrier base (30) with a mounting device (16) for the connection of the bicycle carrier (10) to a rear (12) of the motor vehicle body and at least one wheel accommodating unit (80) for a bicycle (86), said accommodating unit being arranged on the carrier base (30) and comprising a receptacle (32) with a luggage compartment (70), **characterized in that** the receptacle (32) has supporting sections (54, 56) for supporting wheels (82, 84) of the bicycle (86), that the at least one wheel accommodating unit (80) for the bicycles (86) is held on the receptacle (32) and that the at least one wheel accommodating unit (80) has side members (92, 94) protruding to the side beyond the receptacle (32) in at least one bicycle accommodating position (F).

2. Bicycle carrier as defined in claim 1, **characterized in that** the receptacle (32) has a receptacle opening (66) arranged on a side of the carrier base (30) facing away from the mounting device (16) and that the receptacle opening (66) is closable, in particular, by a closure element (64).

3. Bicycle carrier as defined in claim 2, **characterized in that** the closure element (64) is held on the receptacle (32) so as to be movable, in particular, foldable on the receptacle (32).

4. Bicycle carrier as defined in any one of the preceding claims, **characterized in that** the receptacle (32) has a receptacle upper part (42) with supporting sections (54, 56) for the wheels (82, 84) of the bicycles (86), said sections sloping downwards and outwards proceeding from a central section (52).

5. Bicycle carrier as defined in claim 4, **characterized in that** guiding channels (132, 134) for the wheels (82, 84) of at least one bicycle (86) are provided in the region of the supporting sections (54, 56) and that the guiding channels (132, 134) are formed, in particular, by the at least one wheel accommodating unit (80) in conjunction with the supporting sections (54, 56).

6. Bicycle carrier as defined in any one of the preceding claims, **characterized in that** each side member (92, 94) has a guide opening (142, 144) for accommodating an area (146, 148) of a wheel (82, 84) and that the area (146, 148) of the respective wheel (82, 84) passes, in particular, through the guide opening (142, 144).

7. Bicycle carrier as defined in claim 6, **characterized in that** the respective side member (92, 94) engages around the respective guide opening (142, 144).

8. Bicycle carrier as defined in any one of the preceding claims, **characterized in that** the side members (92, 94) are held by a central member (96) held, for its part, on the carrier base (30).

9. Bicycle carrier as defined in any one of the preceding claims, **characterized in that** the side members (92, 94) are positionable in different bicycle accommodating positons (F) relative to the carrier base (30) and that the side members (92, 94) are positionable in various bicycle accommodating positions (F) relative to the carrier base (30), in particular by means of a hinged unit (206, 208).

10. Bicycle carrier as defined in any one of the preceding claims, **characterized in that** the side members (92, 94) are transferable from at least one bicycle accommodating position (F) into a compact position (K) unsuitable for transporting bicycles and that in the compact position (K) the side members (92, 94) engage, in particular, over the carrier base (30).

11. Bicycle carrier as defined in claim 10, **characterized in that** in the compact positon (K) at least one of the side members (92, 94) rests on the carrier base (30).

12. Bicycle carrier as defined in any one of the preceding claims, **characterized in that** the side members (92, 94) are adjustable with respect to their length extension and that the side members (92, 94) have, in particular, a telescopic section for the variable adjustment of their length extension.

## Revendications

1. Porte-vélo servant au montage côté arrière sur une carrosserie de véhicule automobile (14), comprenant une base de support (30) pourvue d'un dispositif de montage (16) pour le rattachement du porte-vélo (10) à un arrière (12) de la carrosserie de véhicule automobile et au moins une unité de logement de roue (80) agencée sur la base de support (30) pour un vélo (86), laquelle unité comprend un contenant (32) comportant un compartiment à bagages (70),
**caractérisé en ce que** le contenant (32) comprend des sections d'appui (54, 56) destinées à soutenir les roues (82, 84) du vélo (86), **en ce que** l'unité ou les unités de logement de roue (80) pour les vélos (86) sont retenues sur le contenant (32), et **en ce que** l'unité ou les unités de logement de roue (80) présentent des parties latérales (92, 94) faisant latéralement saillie du contenant (32) dans au moins une position (F) de logement de vélo.

2. Porte-vélo selon la revendication 1, **caractérisé en ce que** le contenant (32) comprend une ouverture (66) de contenant, qui est ménagée sur un côté de la base de support (30) opposé au dispositif de montage (16) et **en ce que** l'ouverture (66) du contenant peut être fermée en particulier par un élément de fermeture (64).

3. Porte-vélo selon la revendication 2, **caractérisé en ce que** l'élément de fermeture (64) est retenu sur le contenant (32) de manière à pouvoir être déplacé, en particulier rabattu sur le contenant (32).

4. Porte-vélo selon l'une quelconque des revendications précédentes, **caractérisé en ce que** le contenant (32) comprend une partie supérieure (42) de contenant, laquelle présente des sections d'appui (54, 56) s'inclinant vers l'extérieur à partir d'une section centrale (52) pour les roues (82, 84) des vélos (86).

5. Porte-vélo selon la revendication 4, **caractérisé en ce que** des canaux de guidage (132, 134) pour les roues (82, 84) d'au moins un vélo (86) sont prévus dans la zone des sections d'appui (54, 56) et **en ce que** les canaux de guidage (132, 134) sont formés en particulier par l'unité ou les unités de logement de roue (80) en coopération avec les sections d'appui (54, 56).

6. Porte-vélo selon l'une quelconque des revendications précédentes, **caractérisé en ce que** chaque partie latérale (92, 94) comprend un passage de guidage (142, 144) destiné à loger une zone (146, 148) d'une roue (82, 84) et **en ce que** la zone (146, 148) de la roue (82, 84) respective traverse en particulier le passage de guidage (142, 144).

7. Porte-vélo selon la revendication 6, **caractérisé en ce que** la partie latérale (92, 94) respective entoure le passage de guidage (142, 144) respectif.

8. Porte-vélo selon l'une quelconque des revendications précédentes, **caractérisé en ce que** les parties latérales (92, 94) sont retenues par une partie centrale (96), qui est retenue pour sa part sur la base de support (30).

9. Porte-vélo selon l'une quelconque des revendications précédentes, **caractérisé en ce que** les parties latérales (92, 94) peuvent être positionnées dans différentes positions (F) de logement de roue par rapport à la base de support (30) et **en ce que** les parties latérales (92, 94) peuvent être positionnées en particulier dans différentes positions (F) de logement de roue par rapport à la base de support (30) au moyen d'une unité d'articulation (206, 208).

10. Porte-vélo selon l'une quelconque des revendications précédentes, **caractérisé en ce que** les parties latérales (92, 94) peuvent être amenées à passer d'au moins une position (F) de logement de roue dans une position compacte (K) inadaptée à un transport de vélo, et **en ce que** les parties latérales (92, 94) recouvrent la base de support (30) en particulier dans la position compacte (K).

11. Porte-vélo selon la revendication 10, **caractérisé en ce que** dans la position compacte (K), au moins une des parties latérales (92, 94) repose sur la base de support (30).

12. Porte-vélo selon l'une quelconque des revendications précédentes, **caractérisé en ce que** l'extension longitudinale des parties latérales (92, 94) est réglable et **en ce que** les parties latérales (92, 94) présentent en particulier une section télescopique permettant le réglage variable de leur extension longitudinale.
